# EUROPÄISCHE PATENTSCHRIFT

(11) **EP 1 910 999 B1**
(45) Veröffentlichungstag und Bekanntmachung des Hinweises auf die Patenterteilung: **06.03.2013**
(21) Anmeldenummer: 06792716.0
(22) Anmeldetag: 04.08.2006
(51) Int. Cl.: G06T 7/00

(54) **VERFAHREN UND ANORDNUNG ZUR BESTIMMUNG DER RELATIVEN LAGE EINES ERSTEN OBJEKTES BEZÜGLICH EINES ZWEITEN OBJEKTES, SOWIE EIN ENTSPRECHENDES COMPUTERPROGRAMM UND EIN ENTSPRECHENDES COMPUTERLESBARES SPEICHERMEDIUM**
METHOD AND DEVICE FOR DETERMINING THE RELATIVE POSITION OF A FIRST OBJECT WITH RESPECT TO A SECOND OBJECT, CORRESPONDING COMPUTER PROGRAM AND A COMPUTER-READABLE STORAGE MEDIUM
PROCEDE ET DISPOSITIF POUR DETERMINER LA POSITION RELATIVE D'UN PREMIER OBJET PAR RAPPORT A UN SECOND OBJET, PROGRAMME INFORMATIQUE CORRESPONDANT, ET SUPPORT D'ENREGISTREMENT CORRESPONDANT, LISIBLE PAR ORDINATEUR

(30) Priorität: 04.08.2005 DE 102005037841
(43) Veröffentlichungstag der Anmeldung: 16.04.2008
(73) Patentinhaber: Gesellschaft zur Förderung angewandter Informatik e.V., 12489 Berlin (DE)
(72) Erfinder: MEYER, Andy, 10551 Berlin (DE); DÖBLER, Dirk, 15754 Friedersdorf (DE)
(74) Vertreter: Hengelhaupt, Jürgen
(86) Internationale Anmeldenummer: PCT/EP2006/065092
(87) Internationale Veröffentlichungsnummer: WO 2007/014966

(56) Entgegenhaltungen:
- WO-A-2004/101325
- WO-A2-01/01075
- US-A- 4 754 417
- US-A- 5 208 763
- OBERKAMPF D ET AL: "ITERATIVE POSE ESTIMATION USING COPLANAR FEATURE POINTS" COMPUTER VISION AND IMAGE UNDERSTANDING, ACADEMIC PRESS, US, Bd. 63, Nr. 3, 1. Mai 1996 (1996-05-01), Seiten 495-511, XP000597554 ISSN: 1077-3142

## Beschreibung

Die Erfindung betrifft ein Verfahren und eine Anordnung zur Bestimmung der relativen Lage eines ersten Objektes bzgl. eines zweiten Objektes, sowie ein entsprechendes Computerprogramm und ein entsprechendes computerlesbares Speichermedium, welche insbesondere einsetzbar sind, um die räumliche Position und Orientierung von Messanordnungen in beliebigen komplexen Umgebungen zu bestimmen.

Solche Situationen kommen beispielsweise vor bei der Schallanalyse mit Hilfe von Visualisierungen des Schalls, wobei die visualisierte Schalldarstellung mit der bildlichen Darstellung der Schallquelle überlagert wird. Anordnungen zur Durchführung derartiger Schallanalysen sind unter der Bezeichnung Akustische Kamera bekannt.

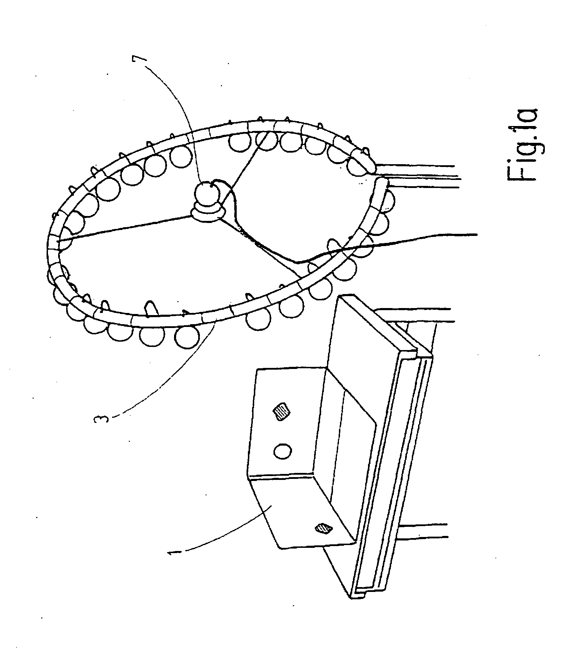

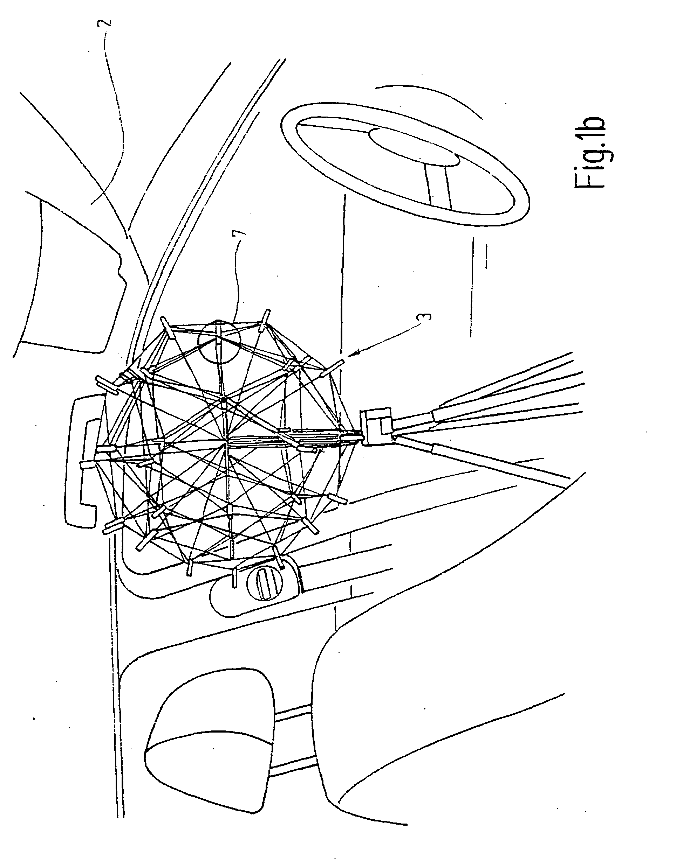

Bei der Schallanalyse mit Hilfe einer Akustischen Kamera wurden Untersuchungen zur Erweiterung vom 2D- zum 3D-Raum durchgeführt. Der Ablauf einer dabei auszuführenden Messung stellte sich dabei wie folgt dar:
1. Die Akustische Kamera wurde in dem auszumessenden Raum (Autoinnenraum, Akustiklabor usw.) den Messbedingungen und gewünschten Ergebnissen entsprechend aufgestellt (vgl. Figur 1);
2. Ein dreidimensionales Modell des Raumes oder des Messobjektes sowie ein Modell der verwendeten Kamera wurden in den Computer geladen;
3. Die Lage (d.i. Position und Orientierung) der Kamera im Raum und zum Messobjekt wurden von Hand bestimmt;
4. Die Messung und Auswertung erfolgt.

In der Praxis erweist sich Punkt 3 als außerordentlich problematisch, ungenau und langwierig:
● Zur Positions- und Orientierungsbestimmung müssen mindestens 6 Messungen mit Zollstock/Bandmaß/Winkelmesser erfolgen, wobei Abstände und Raumwinkel zu ermitteln sind (X-, Y-, Z-Position, Drehung um X-, Y-, Z- Achse).
● Unterschiedliche Koordinatensysteme von Akustischer Kamera und Modell (Modell kommt in der Regel vom Anwender), beengte Verhältnisse sowie schiefwinklige und/oder gekrümmte Räume und Modelle (Autoinnenraum) stellen weitere Schwierigkeiten dar.
● Hinweise über die Genauigkeit der Positionsbestimmung fehlen in der Regel.
● Der zeitliche Aufwand ist erheblich, so dass auf Grund dieses komplizierten und ungenauen Verfahrens derartige Systeme selten angewendet werden.

Für die Positionsbestimmung einer Kamera, welche in der robotergestützten Produktion eingesetzt wird, um reale Bilder in ein virtuelles Modell der Produktionsumgebung einzublenden, wird in der deutschen Offenlegungsschrift DE 103 45 743 A1 vorgeschlagen, die Kamera an einem Roboter anzubringen und für die Positionsbestimmung einer Kamera das robotereigene Meßsystem, z.B. die Winkelsensoren in den Achsantrieben des Roboters, zu nutzen. Allerdings ist Voraussetzung für diese Lösung, dass das die Koordinaten des Roboters bekannt sind- Auf frei eingesetzte Kameras oder andere Sensoren ist diese Lösung nicht anwendbar.

Eine Lösung zur Bestimmung der aktuellen Kopfposition von Fahrzeuginsassen wird in der Internationalen Patentanmeldung WO 2004/101325 A1 vorgestellt. Hierfür wird eine Kamera genutzt, die in einer definierten Position im Innenraum eines Kraftfahrzeugs angeordnet ist und die Köpfe der Insassen erfasst. Durch Auswertung der Bilddaten wird die aktuelle Position und Bewegungsrichtung des Kopfes ermittelt.

In der Publikation Oberkampf, Denis, Daniel F. DeMenthon und Larry S. Davis: Iterative Pose Estimation Using Coplanar Feature Points, Computer Vision and Image Understanding, Vol. 63, No. 3, May, pp. 495 - 511, 1996 wird eine Lösung zur Bestimmung von Position und Orientierung einer Kamera bezüglich eines bekannten Objektes vorgestellt. Dabei wird schrittweise aus einer ersten geschätzten Position und Orientierung des Kamera die genaue Position und Orientierung des Kamera berechnet.

Ein Verfahren zur Bestimmung von Position und Orientierung von mechanischen Objekten wird in der US-Patentschrift US 5,208,763 A beschrieben. Bei diesem Verfahren wird ein Modell der mechanischen Objekte in einer Datenverarbeitungseinrichtung gespeichert. Sensoren erfassen Oberflächenpunkte eines mechanischen Objekts und die Datenverarbeitungseinrichtung berechnet Position und Orientierung des mechanischen Objekts, indem die Summe der Quadrate der Abstände zwischen den erfassten Punkten und den entsprechenden Punkten des Modells minimiert werden.

Die Aufgabe der Erfindung besteht somit darin, ein Verfahren und eine Anordnung zur Bestimmung der relativen Lage eines ersten Objektes bzgl. eines zweiten Objektes, sowie ein entsprechendes Computerprogramm und ein entsprechendes computerlesbares Speichermediumbereitzusrellen, welche die benannten Nachteile vermeiden und insbesondere das Positionierungsproblem in einer für den Anwender anschaulichen, intuitiven und einfachen Weise sowie mit verringertem Zeitaufwand lösen.

Diese Aufgabe wird erfindungsgemäß durch die Merkmale in den Ansprüchen 1, 13, 18 und 19 gelöst. Zweckmäßige Ausgestaltungen der Erfindung sind in den Unteransprüchen enthalten.

Ein besonderer Vorteil des erfindungsgemäßen Verfahrens besteht darin, dass Schritte dieses Verfahrens automatisiert werden können und damit die für die Bestimmung der relativen Lage benötigte Zeit erheblich reduziert werden kann, indem bei dem Verfahren zur Bestimmung der relativen Lage eines ersten Objektes bzgl. eines zweiten Objektes mindestens ein Aufzeichnungsgerät für elektromagnetische und/oder akustische Wellen (im folgenden auch nur als Aufzeichnungsgerät bezeichnet), z.B. eine optische Kamera, eingesetzt wird. Zwischen dem ersten Objekt und dem mindestens einen Aufzeichnungsgerät wird eine definierte Lagebeziehung hergestellt, beispielsweise indem das Aufzeichnungsgerät starr in einer vorgegebenen, bekannten Weise mit dem ersten Objekt verbunden wird. Außerdem wird das mindestens eine Aufzeichnungsgerät derart angeordnet, dass wenigstens ein Teil der von dem zweiten Objekt ausgehenden elektromagnetischen und/oder akustischen Wellen von dem mindestens einen Aufzeichnungsgerät erfasst werden. Bei Verwendung einer optischen Kamera als Aufzeichnungsgerät würde also wenigstens ein Teil des zweiten Objekts auf den Aufzeichnungsträger (Film, CCD-Chip) projiziert. Des weiteren ist erfindungsgemäß vorgesehen, mit Hilfe einer Datenverarbeitungseinrichtung auf welcher entsprechender Programmcode, z.B. in Form von einem oder mehreren. Computerprogrammen, gespeichert ist, die Aufzeichnung der elektromagnetischen und/oder akustischen Wellen zu simulieren. Hierfür wird ein computergeneriertes Modell des zweiten Objektes und ein Modell des mindestens einen Aufzeichnungsgeräts in einem virtuellen Raum angeordnet. Basierend auf einem Modellkoordinatensystem ist die Lage des Modells von zweitem Objekt und Aufzeichnungsgerät(en) in dem virtuellen Raum festgelegt und die Wellenausbreitung und -aufzeichnung kann simuliert werden. Die relative Lage des ersten Objektes bzgl. des zweiten Objektes wird nun bestimmt, indem wenigstens, ein Teil der von dem mindestens einen Aufzeichnungsgerät erfassten Messwerte an die Datenverarbeitungseinrichtung übertragen und dort mit den durch die Simulation gewonnenen Werten hinsichtlich ihrer Ähnlichkeit verglichen und bewertet werden. Im Falle der Verwendung einer Kamera als Aufzeichnungsgerät kann dies beispielsweise ein Mustervergleich sein, bei dem mit der realen Kamera aufgezeichnete Bilder mit den Ergebnissen der simulierten Bildaufzeichnung verglichen werden. Falls der Vergleich ergibt, dass eine hinreichende Ähnlichkeit besteht, bedeutet dies, dass die relative Lage des Aufzeichnungsgeräts bzgl. des zweiten Objektes im wesentlichen dieselbe ist wie die relative Lage des Modells des mindestens einen Aufzeichnungsgeräts bzgl. des Modells des zweiten Objektes in dem virtuellen Raum. Die relative Lage des ersten Objektes bzgl. des zweiten Objektes kann daher leicht aus der relativen Lage des mindestens einen Aufzeichnungsgeräts bzgl. des zweiten Objektes abgeleitet werden, da ja die Lagebeziehung zwischen erstem Objekt und Aufzeichnungsgerät wohldefiniert ist. Für die Bewertung der Ähnlichkeit können nutzerdefinierte Kriterien vorgegeben werden.

Wird das Ähnlichkeitskriterium nicht erfüllt, so wird die Lage des mindestens einen Aufzeichnungsgeräts verändert, um die von dem Aufzeichnungsgerät erfassten Messwerte an die Werte der simulierten Aufzeichnung anzugleichen. Diese Lageänderung kann manuell vorgenommen werden oder automatisch, gesteuert durch ein Computerprogramm erfolgen. In verschiedenen Fällen kann es sich als vorteilhaft erweisen, wenn alternativ oder zusätzlich die Lage des Modells des mindestens einen Aufzeichnungsgeräts und/oder die Lage des Modells des zweiten Objektes in dem virtuellen Raum verändert wird. Dadurch werden die durch das mindestens eine Aufzeichnungsgerät erfassten und/oder die durch die Simulation erzeugten Werte verändert und können erneut verglichen und bewertet werden. Dies kann fortgesetzt werden, bis das vorgegebene Ähnlichkeitskriterium erfüllt wird.

Das erste Objekt kann dabei beispielsweise eine Messanordnung mit mindestens einem Sensor sein. Vorzugsweise umfasst die Messanordnung ein Array von Sensoren. In einer besonders bevorzugten Ausführungsform besteht das Array aus identischen Sensoren. Es ist weiterhin von Vorteil, wenn das mindestens eine Aufzeichnungsgerät zumindest zeitweise fest in das erste Objekt integriert ist, um so die definierte Lagebeziehung zu realisieren. Dies kann beispielsweise durch die Verwendung lösbarer Befestigungsmittel erreicht werden. Eine besonders bevorzugte Ausführungsform des ersten Objektes ist eine Akustische Kamera mit zumindest zeitweise fest integrierter optischer Kamera als Aufzeichnungsgerät, d.h. dass die Messanordnung als Mikrofon-Array mit zumindest zeitweise fest integrierter optischer Kamera ausgebildet ist.

Vorteile des Verfahrens bestehen insbesondere darin, dass:
● keine Messungen von dreidimensionalen Koordinaten und Raumwinkeln notwendig sind und
● eine schnelle, intuitive und anschauliche Möglichkeit zur Positionierung und Orientierung des Aufzeichnungsgeräts bereitgestellt wird.

In Abhängigkeit der Aufgabenstellung kann es sich als vorteilhaft erweisen, die Lage des mindestens einen Aufzeichnungsgeräts zu ändern und die virtuelle Anordnung des Modells des mindestens einen Aufzeichnungsgeräts und/oder des Modells des zweiten Objektes fest beizubehalten. Beispielsweise um ein Aufzeichnungsgerät (z.B. eine Kamera) am Ort einer früheren Aufnahme bzw. Messung zu positionieren, um die Ausführung dieser Aufnahme bzw. Messung zu rekonstruieren oder unter gleichen Bedingungen zu wiederholen. Als Messwerte werden dann beispielsweise eine frühere Aufnahme mit dem von der realen Kamera aufgenommenen Live-Bild überlagert und verglichen, und so die reale Kamera in die Position und Orientierung der ursprünglichen Aufnahme bzw. Messung gebracht.

Ein anderer Fall liegt vor, wenn eine Messapparatur in eine für die Messung günstige Position innerhalb einer (komplexen) Szene wie beispielsweise einem Kraftfahrzeuginnenraum gebracht wurde, und man nun ermitteln will, in welcher Lage sich Messapparatur (in definierter Lage zu mindestens einem Aufzeichnungsgerät) und Szene (zweites Objekt) relativ zueinander befinden. In diesem Falle wird die Anordnung des Modells des mindestens einen Aufzeichnungsgeräts und/ oder des Modells des zweiten Objektes in dem virtuellen Raum geändert und die Lage der Messapparatur als erstes Objekt (und des mindestens einen Aufzeichnungsgerät) fest beibehalten.

Die durch das reale mindestens ein Aufzeichnungsgerät erfassten Messwerte werden dem Computerprogramm beispielsweise über eine kabelgebundene oder drahtlose Kommunikationsverbindung zur Verfügung gestellt.

In der computerinternen Modell-Darstellung werden die einzelnen Elemente anhand eines Modell-Koordinatensystems ausgerichtet. Auch die Lagebestimmung des ersten Objektes bzgl. des zweiten Objektes erfolgt natürlich anhand eines vorgegebenen Koordinatensystems. Dieses Koordinatensystem kann absolut vorgegeben, d.h.: unabhängig von erstem Objekt und zweitem Objekt sein. Es kann aber ebenso gut fest mit dem ersten Objekt oder dem zweiten Objekt verknüpft sein. In einer bevorzugten Ausführungsform des erfindungsgemäßen Verfahrens ist deshalb vorgesehen, dass reales und virtuelles erstes und zweites Objekt mit jeweils einem zugehörigen Koordinatensystem verknüpft werden, und die relative Lage des ersten Objektes bzgl. des zweiten Objektes durch Koordinatentransformation aus der relativen Lage des Modells des mindestens einen Aufzeichnungsgeräts und des Modells des zweiten Objektes aus der Anordnung in dem virtuellen Raum abgeleitet wird. Hierfür sind lediglich einfache Koordinatentransformationen auszuführen.

Wenn als Aufzeichnungsgerät eine Kamera verwendet wird, ist in einer anderen bevorzugten Ausführungsform des erfindungsgemäßen Verfahrens vorgesehen, dass der Vergleich der Messwerte Verfahrensschritte der Photogrammmetrie, der Computergraphik und/oder Verfahrensschritte der Bildverarbeitung umfasst. Insbesondere können die Auswertung von Kollinearitätsbedingungen als Verfahrensschritt der Photogrammmetrie und/oder ein Mustervergleich als Verfahrensschritte der Bildverarbeitung zur Anwendung kommen.

Als vorteilhaft erweist es sich darüber hinaus, wenn der Vergleich der Messwerte die Ermittlung mindestens eines Ähnlichkeitswertes umfasst. In Abhängigkeit des Ähnlichkeitswertes kann dann der Anpassvorgang des Modells an die reale Situation (oder umgekehrt) beendet und die relative Lage der beiden Objekte zueinander bestimmt werden. In einer anderen bevorzugten Ausführungsform des erfindungsgemäßen Verfahrens wird der Ähnlichkeitswert durch Differenzanalyse ermittelt.

In einer weiteren bevorzugten Ausführungsform des erfindungsgemäßen Verfahrens ist vorgesehen, dass die durch das (reale) mindestens eine Aufzeichnungsgerät erfassten und/oder die durch die Simulation gewonnenen Werte visualisiert werden, vorzugsweise auf der Benutzeroberfläche einer Datenverarbeitungseinrichtung.

Eine Beschleunigung des Verfahrens zur Bestimmung der relativen Lage eines ersten Objektes bzgl. eines zweiten Obektes erreicht man, wenn die Lageänderung des mindestens einen Aufzeichnungsgeräts und/oder die Änderung der Anordnung des Modells des mindestens einen Aufzeichnungsgeräts und/oder des Modells des zweiten Objektes in dem virtuellen Raum optimiert wird. Eine solche Optimierung wird erreicht, indem mindestens ein Messwert aus der Menge der durch das (reale) mindestens eine Aufzeichnungsgerät erfassten Messwerte als Startwert und jeweils ein Punkt des Modells des zweiten Objektes als zugehöriger Zielwert markiert werden, und die Änderung der Lage des mindestens einen Aufzeichnungsgeräts und/oder die Änderung der Anordnung des Modells des mindestens einen Aufzeichnungsgeräts und/oder des Modells des zweiten Objektes in dem virtuellen Raum in Abhängigkeit der markierten Start - und Zielwerte erfolgt. In Abhängigkeit der Aufgabenstellung (vgl. die Ausführungen oben) kann es von Vorteil sein, wenn mindestens ein Punkt des Modells des zweiten Objektes als Startwert und jeweils ein Messwert aus der Menge der durch das (reale) mindestens eine Aufzeichnungsgerät erfassten Messwerte als zugehöriger Zielwert markiert werden. Nach der Markierung läuft die Änderung der Lage bzw. der virtuellen Anordnung gesteuert durch ein Computerprogramm automatisch ab.

Die Markierung des mindestens einen Start- und Zielwerts erfolgt vorteilhafterweise per Dateneingabe durch einen Bediener über die Benutzeroberfläche der Datenverarbeitungseinrichtung. Für die Eingabe können alle üblichen Eingabemittel, wie Computer-Maus, Touchscreen oder dergleichen genutzt werden.

Wenn als Aufzeichnungsgerät eine optische Kamera eingesetzt wird, werden durch die Markierung der Punktpaare Verbindungsgeraden definiert, die durch einen Punkt des Modells des zweiten Objektes (Zielwert) und den Punkt des Kameramodells (Startwert) verlaufen, welcher dem Punkt der realen optischen Kamera entspricht, auf den der Punkt des realen zweiten Objektes projiziert wird, der dem Zielwert im Modell entspricht. Diese Verbindungsgeraden können nun im Hinblick auf Kollinearitätsbedingungen ausgewertet und eine entsprechende Änderung der Lage des mindestens einen Aufzeichnungsgeräts und/oder eine entsprechende Änderung der Anordnung des Modells des mindestens einen Aufzeichnungsgeräts und/oder des Modells des zweiten Objektes in dem virtuellen Raum vorgenommen werden. Im Ergebnis dieser Lageänderungen wird der Zielwert durch die Simulation der Kameraaufzeichnung auf den zugehörigen Starwert abgebildet. Mit anderen Worten: die virtuelle Kamera (Modell des mindestens einen Aufzeichnungsgeräts) sieht das Modell des zweiten Objektes genau so, wie die reale optische Kamera das reale zweite Objekt.

Ein weitere besonderer Vorteil des erfindungsgemäßen Verfahrens besteht darin, dass die Bestimmung der relativen Lage des ersten Objektes bzgl. des zweiten Objektes während der Erfassung der Messwerte durch das mindestens eine Aufzeichnungsgeräts (online) erfolgen kann.

Eine erfindungsgemäße Anordnung zur Bestimmung der relativen Lage eines ersten Objektes bzgl. eines zweiten Objektes umfasst mindestens ein Aufzeichnungsgerät für elektromagnetische und/oder akustische Wellen in definierter Lagebeziehung zu dem ersten Objekt und eine Datenverarbeitungseinrichtung, wobei das mindestens eine Aufzeichnungsgerät derart angeordnet ist, dass von dem zweiten Objekt ausgehende elektromagnetische und/oder akustische Wellen wenigstens teilweise durch das mindestens eine Aufzeichnungsgerät erfasst werden und die Anordnung derart eingerichtet ist, dass ein Verfahren zur Bestimmung der relativen Lage eines ersten Objektes bzgl. eines zweiten Objektes ausführbar ist, indem mittels eines oder mehrerer auf der Datenverarbeitungseinrichtung installierter Computerprogramme die Aufzeichnung der elektromagnetischen und/oder akustischen Wellen simuliert wird, indem in einem virtuellen Raum ein Modell des mindestens einen Aufzeichnungsgeräts und ein Modell des zweiten Objektes angeordnet werden, und die relative Lage des ersten Objektes bzgl. des zweiten Objektes bestimmt wird, indem
- die durch das mindestens eine Aufzeichnungsgerät erfassten Messwerte dem Computerprogramm zur Verfügung gestellt und mit den durch die Simulation erzeugten Werten verglichen und hinsichtlich ihrer Ähnlichkeit bewertet werden,
- die relative Lage des ersten Objektes bzgl. des zweiten Objektes aus der relativen Lage des Modells des mindestens einen Aufzeichnungsgeräts bzgl. des Modells des zweiten Objektes in dem virtuellen Raum abgeleitet wird, falls das Ergebnis der Bewertung ein vorgebbares Kriterium erfüllt, oder
- durch Änderung der Lage des mindestens einen Aufzeichnungsgeräts und/oder Änderung der Anordnung des Modells des mindestens einen Aufzeichnungsgeräts und/oder des Modells des zweiten Objektes in dem virtuellen Raum die durch das mindestens eine Aufzeichnungsgerät erfassten und/oder die durch die Simulation erzeugten Werte verändert, erneut verglichen und bewertet werden.

Vorteilhafterweise wird das Verfahren zur Bestimmung der relativen Lage eines ersten Objektes bzgl. eines zweiten Objektes mit Hilfe eines Computerprogramms ausgeführt. Ein solches erfindungsgemäßes Computerprogramm ist dadurch ausgezeichnet, dass das Computerprogramm es einem Computer ermöglicht, nachdem es in den Speicher des Computers geladen worden ist, ein Verfahren zur Bestimmung der relativen Lage eines ersten Objektes bzgl. eines zweiten Objektes auszuführen, wobei das erste Objekt eine definierte Lagebeziehung zu mindestens einem Aufzeichnungsgerät für elektromagnetische und/oder akustische Wellen aufweist und das mindestens eine Aufzeichnungsgerät derart angeordnet wird, dass von dem zweiten Objekt ausgehende elektromagnetische und/oder akustische Wellen wenigstens teilweise durch das mindestens eine Aufzeichnungsgerät erfasst werden,
in einer Datenverarbeitungseinrichtung mittels eines oder mehrerer auf der Datenverarbeitungseinrichtung installierter Computerprogramme die Aufzeichnung der elektromagnetischen und/oder akustischen Wellen simuliert wird, indem in einem virtuellen Raum ein Modell des mindestens einen Aufzeichnungsgeräts und ein Modell des zweiten Objektes angeordnet werden, und
die relative Lage des ersten Objektes bzgl. des zweiten Objektes bestimmt wird, indem
- die durch das mindestens eine Aufzeichnungsgerät erfassten Messwerte dem Computerprogramm zur Verfügung gestellt und mit den durch die Simulation erzeugten Werten verglichen und hinsichtlich ihrer Ähnlichkeit bewertet werden,
- die relative Lage des ersten Objektes bzgl. des zweiten Objektes aus der relativen Lage des Modells des mindestens einen Aufzeichnungsgeräts bzgl. des Modells des zweiten Objektes in dem virtuellen Raum abgeleitet wird, falls das Ergebnis der Bewertung ein vorgebbares Kriterium erfüllt, oder
- durch Änderung der Lage des mindestens einen Aufzeichnungsgeräts und/oder Änderung der Anordnung des Modells des mindestens einen Aufzeichnungsgeräts und/oder des Modells des zweiten Objektes in dem virtuellen Raum die durch das mindestens eine Aufzeichnungsgerät erfassten und/oder die durch die Simulation erzeugten Werte verändert, erneut verglichen und bewertet werden.

Beispielsweise können diese Computerprogramme (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 18 aus einem elektronischen Datennetz, wie beispielsweise aus dem Internet, auf eine an das Datennetz angeschlossene Datenverarbeitungseinrichtung heruntergeladen wird.

Für den Vertrieb des erfindungsgemäßen Computerprogramms wird vorteilhafterweise ein computerlesbares Speichermedium eingesetzt auf dem ein Programm gespeichert ist, das es einem Computer ermöglicht, nachdem es in den Speicher des Computers geladen worden ist, ein Verfahren zur Bestimmung der relativen Lage eines ersten Objektes bzgl. eines zweiten Objektes auszuführen, wobei das erste Objekt eine definierte Lagebeziehung zu mindestens einem Aufzeichnungsgerät für elektromagnetische und/oder akustische Wellen aufweist und das mindestens eine Aufzeichnungsgerät derart angeordnet wird, dass von dem zweiten Objekt ausgehende elektromagnetische und/oder akustische Wellen wenigstens teilweise durch das mindestens eine Aufzeichnungsgerät erfasst werden, in einer Datenverarbeitungseinrichtung mittels eines oder mehrerer auf der Datenverarbeitungseinrichtung installierter Computerprogramme die Aufzeichnung der elektromagnetischen und/oder akustischen Wellen simuliert wird, indem in einem virtuellen Raum ein Modell des mindestens einen Aufzeichnungsgeräts und ein Modell des zweiten Objektes angeordnet werden, und
die relative Lage des ersten Objektes bzgl. des zweiten Objektes bestimmt wird, indem
- die durch das mindestens eine Aufzeichnungsgerät erfassten Messwerte dem Computerprogramm zur Verfügung gestellt und mit den durch die Simulation erzeugten Werten verglichen und hinsichtlich ihrer Ähnlichkeit bewertet werden,
- die relative Lage des ersten Objektes bzgl. des zweiten Objektes aus der relativen Lage des Modells des mindestens einen Aufzeichnungsgeräts bzgl. des Modells des zweiten Objektes in dem virtuellen Raum abgeleitet wird, falls das Ergebnis der Bewertung ein vorgebbares Kriterium erfüllt, oder
- durch Änderung der Lage des mindestens einen Aufzeichnungsgeräts und/oder Änderung der Anordnung des Modells des mindestens einen Aufzeichnungsgeräts und/oder des Modells des zweiten Objektes in dem virtuellen Raum die durch das mindestens eine Aufzeichnungsgerät erfassten und/ oder die durch die Simulation erzeugten Werte verändert, erneut verglichen und bewertet werden.

Die Erfindung wird nachfolgend unter Bezugnahme auf die Figuren der Zeichnungen an einem Ausführungsbeispiel näher erläutert. Es zeigen:
- Figur 1:: Akustische Kamera und zu vermessendes 3D-Objekt. a) Kastenmodell; b) Kraftfahrzeuginnenraum;
- Figur 2:: Blick auf das in den Raum projizierte Live-Bild eines 3D-Objekts, welches von einer mit der Akustischen Kamera verbundenen optischen Kamera aufgenommen wurde, das 3D-Modell (Figur 2a Kastenmodell; Figur 2b Kraftfahrzeuginnenraum) und die Mikrofone der Akustischen Kamera aus der Sicht einer virtuellen Kamera (visualisiert auf einem Computerbildschirm);
- Figur 3:: Monitoransicht mit Blick auf das 3D-Modell (Figur 3a Kastenmodell; Figur 3b Kraftfahrzeuginnenraum) und das optische Bild aus der Sicht der optische Kamera;
- Figur 4a, b:: Blick wie Figur 3, wobei das Modell der Akustischen Kamera und der mit ihr verbundenen optischen Kamera in Position und Orientierung so angeordnet ist, dass das optische Bild aus der Sicht der optischen Kamera (Live-Bild) und die von der virtuellen Kamera aufgenommene zweidimensionale Projektion der Modell-Szene in erster Annäherung zur Deckung gebracht wurden;
- Figur 5a, b:: Blick wie Figur 4 nachdem Punktpaare zur Automatisierung der Anpassung von der durch die virtuelle Kamera aufgenommenen zweidimensionalen Projektion der Modell-Szene an das optische Bild aus der Sicht der optischen Kamera (Live-Bild) gewählt wurden;
- Figur 6a, b:: Blick wie Figur 5 nach der Berechnung und der Verbesserung der Position und der Orientierung;

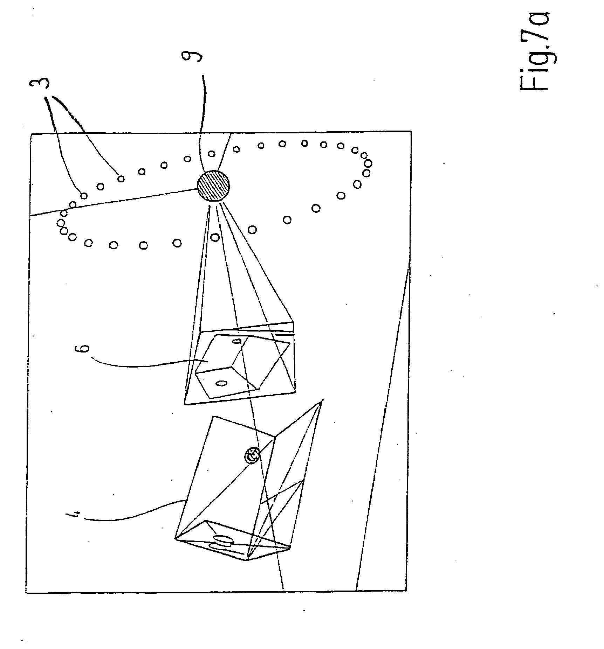

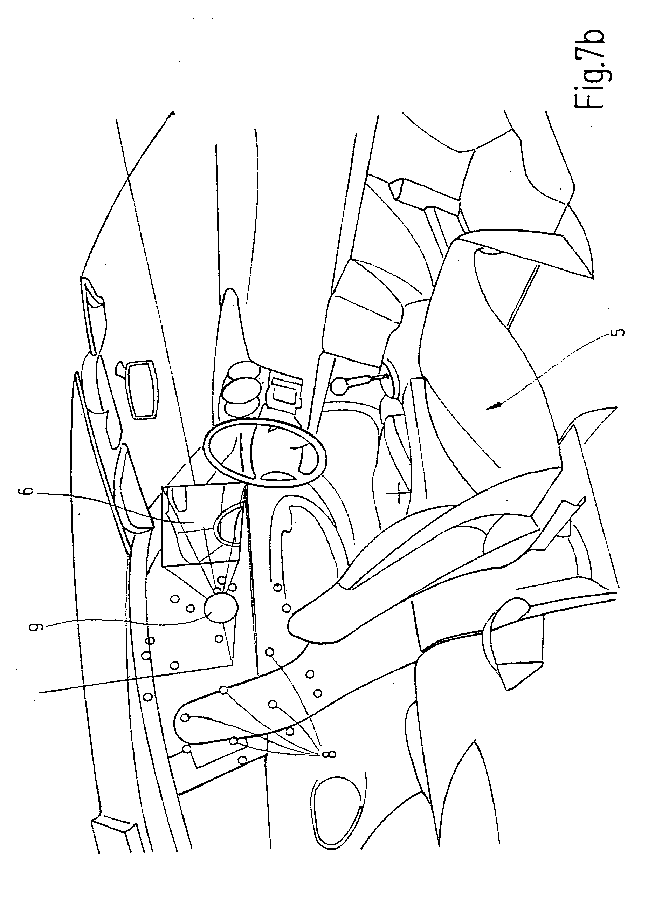

- Figur 7a, b:: Blick auf das 3D-Modell (Figur 7a Kastenmodell; Figur 7b Kraftfahrzeuginnenraum), die Mikrofone der Akustischen Kamera mit der optischen Kamera und das optische Bild aus der Sicht der virtuellen Kamera nach der erfolgreichen Orientierung und Positionierung.

Im Folgenden soll die Erfindung beispielhaft an dem Spezialfall der Lagebestimmung einer Akustischen Kamera 3 bezüglich eines einfachen geometrischen Objektes (Kastenmodell 1) und bezüglich einer komplexen Umgebung (Kraftfahrzeuginnenraum 2) detaillierter erläutert werden. Bei dem im folgenden dargestellten Verfahren wird die akustische Kamera 3 in einer für die Messung vorteilhaften Stellung positioniert und durch Modifizierung des computerinternen Modells (Modell 4 des 3D-Objektes bzw. Modell 5 des Kraftfahrzeuginnenraums 2) das reale Live-Bild 6 der optischen Kamera 7 mit der simulierten Aufnahme einer virtuellen Kamera in Übereinstimmung gebracht. Nachdem beide Bilder in Übereinstimmung gebracht wurden, kennt man die relative Lage von optischen Kamera 7 und Kastenmodell 1 bzw. Kraftfahrzeuginnenraum 2, woraus sich durch die definierte Lagebeziehung zwischen optischer Kamera 7 und Akustischer Kamera 3 leicht die relative Lage von Akustischer Kamera 3 und Kastenmodell 1 bzw. Kraftfahrzeuginnenraum 2 berechnen lässt.

Dabei ist zu berücksichtigen, dass die Erfindung nicht auf das im folgenden beschriebene Ausführungsbeispiel eingeschränkt ist, sondern vielmehr ist das Verfahren auch anwendbar, wenn beispielsweise die optische Kamera 7 bewegt wird, um das Live-Bild mit der simulierten Aufnahme der virtuellen Kamera in Übereinstimmung zu bringen oder anstelle der optische Kamera 7 ein anderes Aufzeichnungsgerät für elektromagnetische und/oder akustische Wellen (beispielsweise eine akustische Kamera) eingesetzt wird.

In dem Ausführungsbeispiel wird eine Akustische Kamera 3 benutzt, in welche ein optischer Sensor eingebaut ist, beispielsweise eine digitale Videokamera, die ein Live-Videobild liefert. Sie ist dort physikalisch vorhanden. Dabei stellt die Akustische Kamera 3 das erste Objekt dar, und die optische Kamera 7 das mindestens eine Aufzeichnungsgerät.

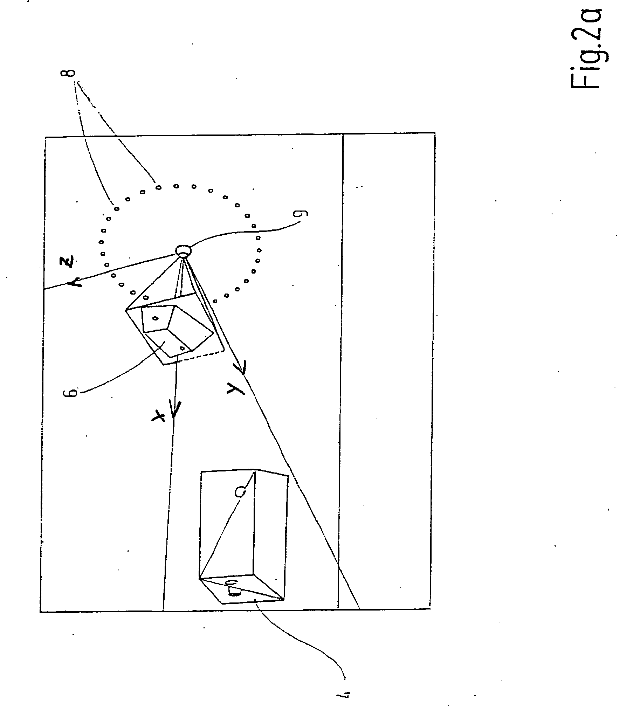

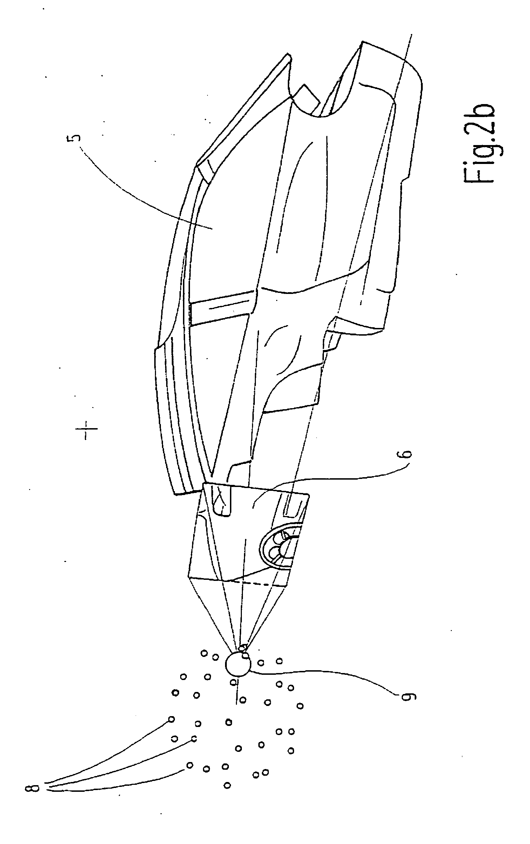

Des Weiteren wird in dem Ausführungsbeispiel eine virtuelle Kamera benutzt. Mit ihr wird die Messwerterfassung durch die optische Kamera 7 simuliert. Sie stellt somit den virtuellen Blick durch die Kamera dar, mit der die dreidimensionale Szene, bestehend aus Modell 8 der Akustischen Kamera und dem Modell 4 des 3D-Objektes, am Bildschirm betrachtet werden kann (vgl. Figur 2a, b). Die Simulation umfasst insbesondere die Nachbildung des Strahlengangs vom realen Objekt durch das Linsensystem der (realen) optischen Kamera 7 und die Projektion der (realen) dreidimensionalen Szene auf den entsprechenden Aufzeichnungsträger der (realen) optischen Kamera 7 (CCD-Chip oder Film). Da die Simulation die optischen Parameter der realen optischen Kamera 7 wie beilspielsweise Brennweite, Öffnungswinkel oder ggf. Verzerrung berücksichtigt, erhält man als Ergebnis der Simulation eine zweidimensionale Projektion 11 der virtuellen 3D-Szene, und zwar so, als ob eine entsprechende reale Szene mit der realen optischen Kamera 7 aufgenommen würde.

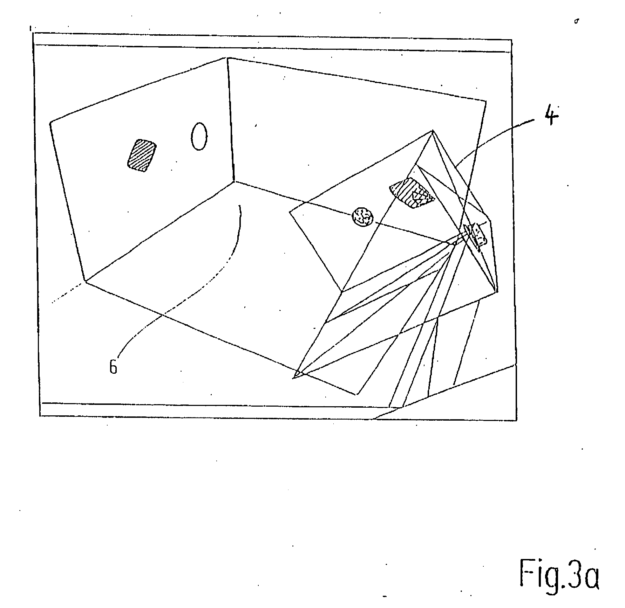

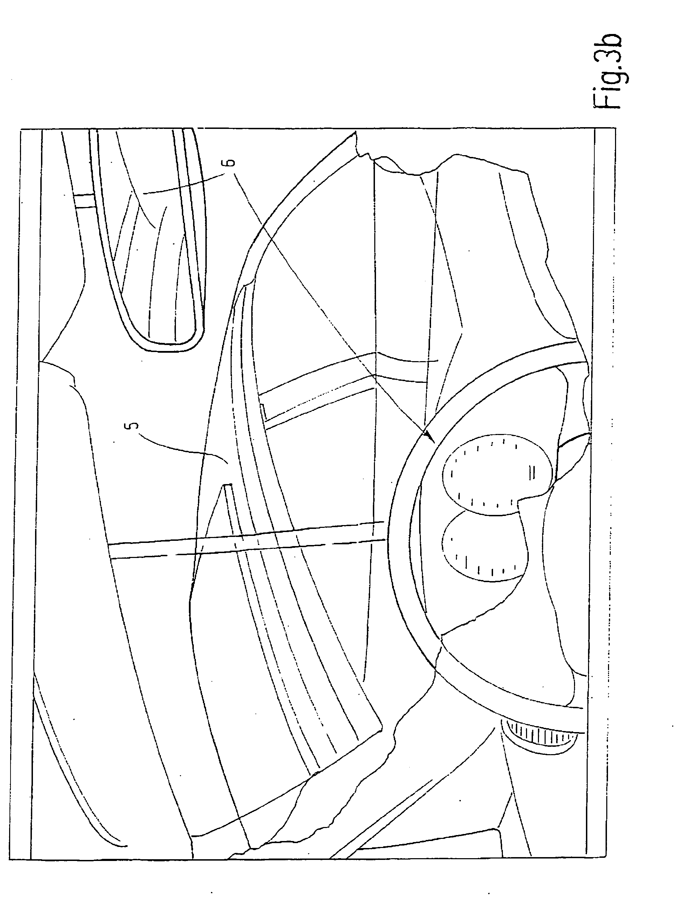

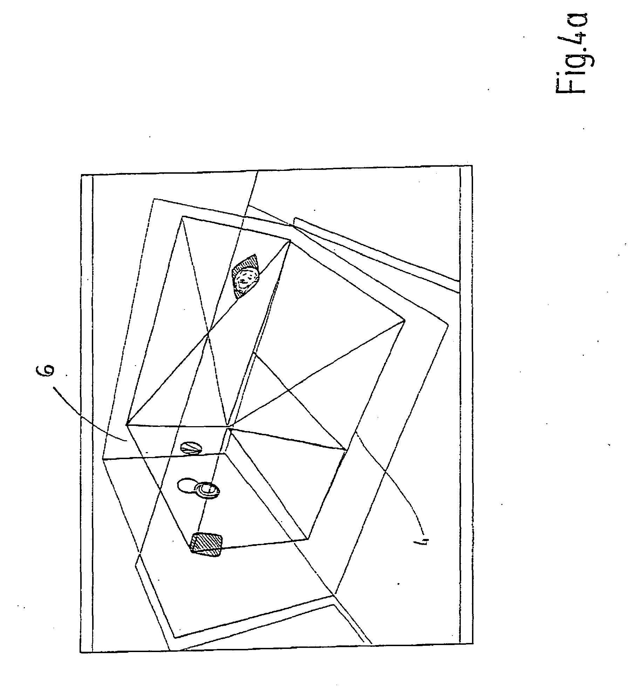

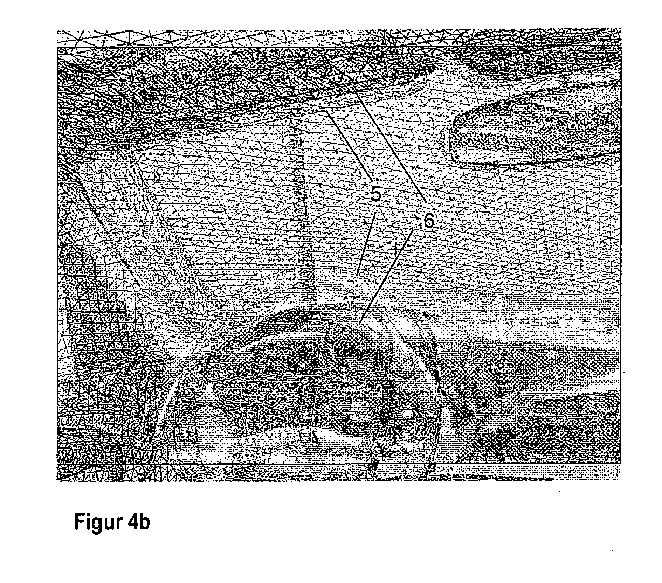

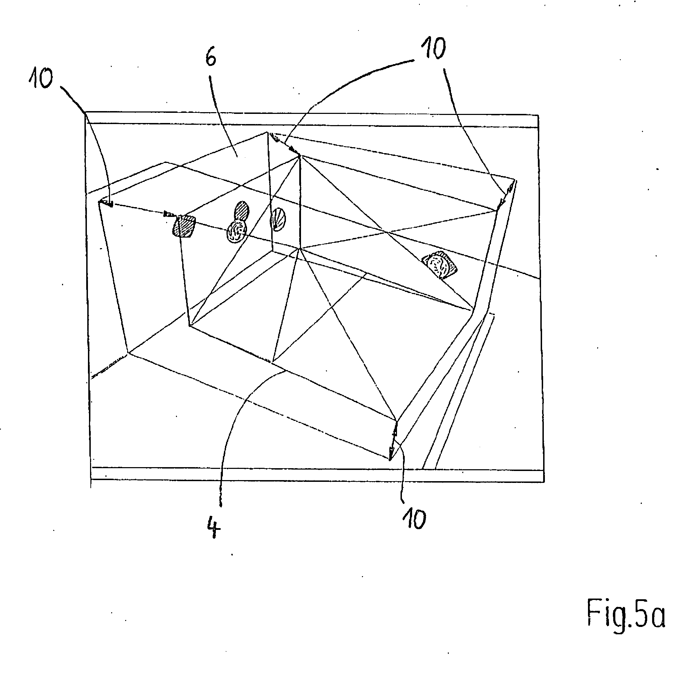

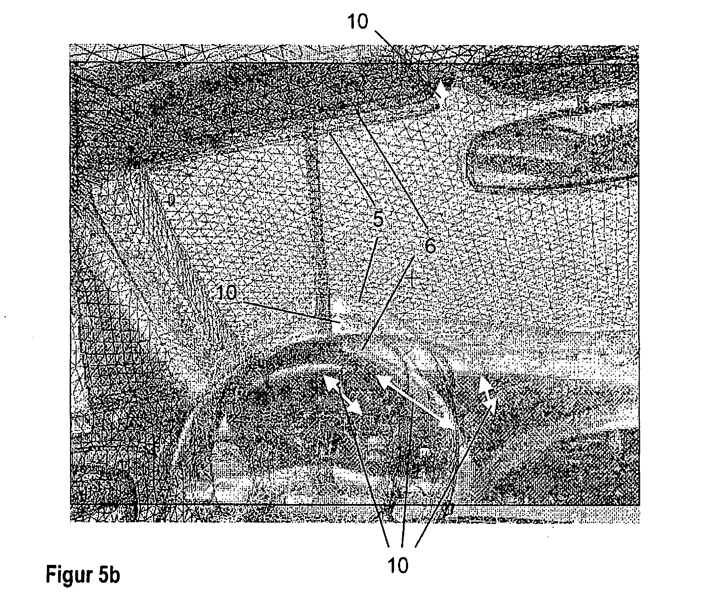

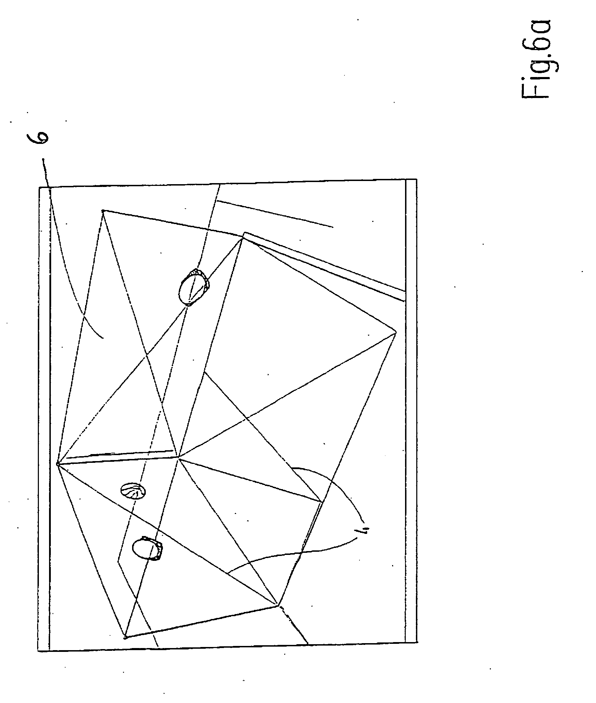

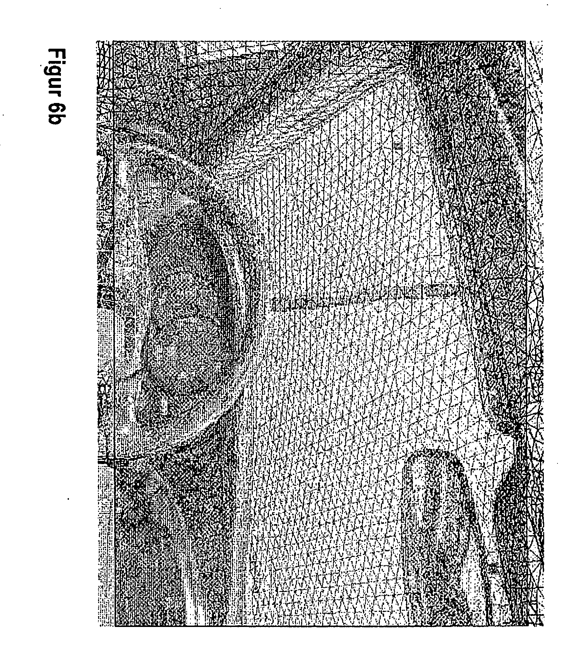

Eine Bestimmung der relativen Lage der Akustischen Kamera 3 bezüglich des Kastenmodells 1 bzw. des Kraftfahrzeuginnenraums 2 läuft beispielsweise folgendermaßen ab (hierbei stellt das Kastenmodell 1 bzw. der Kraftfahrzeuginnenraum 2 das zweite Objekt dar, bezüglich dessen die relative Lage der Akustischen Kamera 3 bestimmt werden soll):
1. Die Akustische Kamera 3 wird im Raum (Kraftfahrzeuginnenraum 2, Akustiklabor usw.) den Messbedingungen und gewünschten^{*} Ergebnissen entsprechend aufgestellt (Figur 1a, b).
2. Ein dreidimensionales Modell des Raumes oder des Messobjektes (z.B. Kastenmodell 1 oder Kraftfahrzeuginnenraum 2) und ein Modell der verwendeten Akustischen Kamera 3 werden in den Computer geladen. Diese Szene kann nun durch die virtuelle Kamera betrachtet und diese Sicht durch die virtuelle Kamera auf dem Bildschirm eines Computers visualisiert werden. Dann ergibt sich eine Szene wie im Figur 2a oder 2b zu sehen ist.
   Daneben wird in Figur 2a und 2b auch das Live-Bild 6 der optischen Kamera 7 gezeigt.
3. Positions- und Orientierungsbestimmung
   ● In einem ersten Schritt wird nun die virtuelle Kamera automatisch in die Position und Orientierung des Modells der optischen Kamera 9 gebracht. Das kann bei Benutzung eines Computerprogramms durch Eingabe über eine graphische Benutzeroberfläche geschehen, beispielsweise durch Drücken eines Buttons "Camera Orientation". Wenn beide Kamerapositionen in Übereinstimmung gebracht wurden, werden virtuelle Kamera und das Modell 9 des optischen Kamera "vereinigt". Der Benutzer hat nun den Eindruck, als betrachte er die Szene aus der Sicht des im Modell 8 der Akustischen Kamera befindlichen Modells 9 der optischen Kamera. Durch das Verändern der Bildtransparenz ist es möglich, sowohl das Live-Bild 6 als auch das dreidimensionale Modell zu sehen. (siehe Figur 3a, b).
   ● Mit Hilfe der Maus und der Cursortasten können nun die Position und die Orientierung der virtuellen Kamera so im (virtuellen) Modell-Raum verändert werden, dass das dreidimensionale Objekt (Modell 4 des 3D-Objektes oder Modell 5 des Kraftfahrzeuginnenraums) grob mit dem Live-Bild 6 übereinstimmt (Kamerafahrt). Dabei wird das Modell der akustischen Kamera 3 in gleicher Weise mitgeführt (siehe Figur 4a, b).
   ● Nachdem diese Grobpositionierung erfolgte, ist auf dem Computerdisplay eine Überlagerung von Live-Bild 6 und der zweidimensionalen Projektion 11 der virtuellen 3D-Szene (als Ergebnis der Simulation der Messwerterfassung durch die reale optische Kamera 7) in grober Übereinstimmung zu sehen. Nun kann der weitere Ablauf automatisiert werden. Es. kann beispielsweise in einen Positionierungsmodus des Computerprogramms umgeschaltet werden. Es werden nun auf dem Computerdisplay nacheinander Punktpaare 10 (vorzugsweise ein Modellpunkt und der entsprechende Punkt im Live-Bild 6) mit der Maus angewählt. (Entsprechende Punktpaare sind zum Beispiel rechte obere Ecke des Kastenmodells und rechte obere Ecke des Kastens in der Projektion o. dgl.) Die Punktpaare 10 werden vorteilhafterweise auf dem Computerdisplay durch Doppelpfeile symbolisiert. Mindestens drei räumlich verteilte Punktpaare 10 sind auszuwählen. Jedes weitere Punktpaar 10 dient zur Verbesserung der Position und der Orientierung sowie der Ermittlung der Genauigkeit. Außerdem können automatisch Eingabefehler des Nutzers (Ausreißer) erkannt werden (Figur 5a, b).
   ● Durch die Eingabe der Punktpaare 10 sind einem Computerprogramm die Angaben bereitgestellt worden, mit deren Hilfe die virtuelle Kamera automatisch in dieselbe Lage gebracht werden kann, wie die reale optische Kamera 7, indem die von der virtuellen Kamera aufgenommene zweidimensionale Projektion 11 der Modell-Szene mit dem Live-Bild 6 in Deckung gebracht wird. Hierfür ist eine Vielzahl von Verfahren der Bildverarbeitung bekannt. Bei dem hier beschriebenen Vorgehen, d.h. bei Auswahl eines Modellpunktes und eines entsprechenden Punktes im Live-Bild 6 kommt vorzugsweise eine Auswertung von Kollinearitätsbedingungen zur Anwendung. Ein Computerprogramm, welches dies ausführt, kann z.B. durch Drücken des Buttons "Calculate" gestartet werden. Dann wird die korrekte Kameraposition und Orientierung ermittelt und dargestellt (Fitting). Die von der virtuellen Kamera aufgenommene zweidimensionale Projektion 11 der Modell-Szene mit dem Live-Bild 6 ist in Deckung. Die Position und Orientierung des Modells 9 der optischen Kamera und damit die Position der mit ihr verbundenen Akustischen Kamera 3 bezüglich des Messobjektes ist nun auf einfache Weise bestimmbar, da die Koordinaten der entsprechenden Modelle bekannt sind (Figur 6a, b).
      Bei der Eingabe der Punktpaare 10 können sich möglicherweise Ungenauigkeiten ergeben. Um diese zu korrigieren ist in einem weiteren Ausführungsbeispiel vorgesehen, die Bestimmung der relativen Lage der Akustischen Kamera 3 bezüglich des Kastenmodells 1 bzw. bezüglich des Kraftfahrzeuginnenraums 2 weiter zu präzisieren, indem nach dem In-Deckung-Bringen mit Hilfe der Punktpaare 10 als weiterer Schritt ein Mustervergleich des Live-Bildes 6 und der zweidimensionalen Projektion 11 der virtuellen 3D-Szene durchgeführt wird. Durch diesen zusätzlichen Mustervergleich können ebenfalls Eingabefehler bei der Auswahl der Punktpaare 10 korrigiert werden. Es ist auch denkbar, die Bestimmung der relativen Lage der Akustischen Kamera 3 bezüglich des Kastenmodells 1 bzw. bezüglich des Kraftfahrzeuginnenraums 2 allein durch Mustervergleich des Live-Bildes 6 und der zweidimensionalen Projektion 11 der virtuellen 3D-Szene durchzuführen, d.h., ohne Punkte aus dem Live-Bild 6 mit Punkten des virtuellen Modell zu verbinden. Hierfür wird das Modell 9 der optischen Kamera virtuell im 3D-Modell bewegt und durch Mustervergleich der dabei erzeugten zweidimensionalen Projektion 11 der virtuellen 3D-Szene und des Live-Bildes 6 (vorzugsweise automatisch) eine Entscheidung über die weitere Bewegungsrichtung oder den Abbruch des Verfahrens getroffen.
   ● Die virtuelle Kamera löst sich von der Position und Orientierung des Modells 9 der optischen Kamera und betrachtet die Szene wieder "von außen". Dann befinden sich das Modell 8 der Akustischen Kamera und das Modell 4 des 3D-Objektes bzw. das Modell 5 des Kraftfahrzeuginnenraumes in der Modell-Szene in genau derselben Lage (Ort und Orientierung), wie die reale Akustische Kamera 3 und das reale Kastenmodell 1 bzw. der reale Kraftfahrzeuginnenraum 2.

### Bezugszeichenliste

- 1: Kastenmodell
- 2: Kraftfahrzeuginnenraum
- 3: Akustische Kamera
- 4: Modell des 3D-Objektes
- 5: Modell des Kraftfahrzeuginnenraums
- 6: Live-Bild
- 7: optische Kamera
- 8: Modell der Akustischen Kamera
- 9: Modell der optischen Kamera
- 10: Punktpaar
- 11: von der virtuellen Kamera aufgenommene zweidimensionale Projektion der Modell-Szene

## Patentansprüche

1. Verfahren zur Bestimmung der relativen Lage eines ersten Objektes bzgl. eines zweiten Objektes, wobei das erste Objekt eine definierte Lagebeziehung zu mindestens einem Aufzeichnungsgerät für elektromagnetische und/oder akustische Wellen aufweist und das mindestens eine Aufzeichnungsgerät derart angeordnet wird, dass von dem zweiten Objekt ausgehende Wellen wenigstens teilweise durch das mindestens eine Aufzeichnungsgerät erfasst werden, **dadurch gekennzeichnet, dass**
in einer Datenverarbeitungseinrichtung mittels eines oder mehrerer auf der Datenverarbeitungseinrichtung installierter Computerprogramme die Aufzeichnung der elektromagnetischen und/oder akustischen Wellen simuliert wird, indem in einem virtuellen Raum ein Modell des mindestens einen Aufzeichnungsgeräts und ein Modell des zweiten Objektes angeordnet werden, und
die relative Lage des ersten Objektes bzgl. des zweiten Objektes bestimmt wird, indem
- die durch das mindestens eine Aufzeichnungsgerät erfassten Messwerte dem Computerprogramm zur Verfügung gestellt und mit den durch die Simulation erzeugten Werten verglichen und hinsichtlich ihrer Ähnlichkeit bewertet werden,
- die relative Lage des ersten Objektes bzgl. des zweiten Objektes aus der relativen Lage des Modells des mindestens einen Aufzeichnungsgeräts bzgl. des Modells des zweiten Objektes in dem virtuellen Raum abgeleitet wird, falls das Ergebnis der Bewertung ein vorgebbares Kriterium erfüllt, oder
- durch Änderung der Lage des mindestens einen Aufzeichnungsgeräts und/oder Änderung der Anordnung des Modells des mindestens einen Aufzeichnungsgeräts und/oder des Modells des zweiten Objektes in dem virtuellen Raum die durch das mindestens eine Aufzeichnungsgerät erfassten und/oder die durch die Simulation erzeugten Werte verändert, erneut verglichen und bewertet werden.

2. Verfahren nach Anspruch 1,
**dadurch gekennzeichnet, dass**
als Aufzeichnungsgerät eine optische Kamera (7) und/oder eine akustische Kamera (3) eingesetzt wird.

3. Verfahren nach Anspruch 1 oder 2,
**dadurch gekennzeichnet, dass**
erstes und zweites Objekt sowie das Modell des mindestens einen Aufzeichnungsgeräts und das Modell des zweiten Objektes mit jeweils einem zugehörigen Koordinatensystem verknüpft werden und die relative Lage des ersten Objektes bzgl. des zweiten Objektes durch Koordinatentransformation aus der relativen Lage des Modells des mindestens einen Aufzeichnungsgeräts bzgl. des Modells des zweiten Objektes im virtuellen Raum abgeleitet wird.

4. Verfahren nach einem der voranstehenden Ansprüche,
**dadurch gekennzeichnet, dass**
der Vergleich der Messwerte Verfahrensschritte der Photogrammmetrie, der Computergraphik und/oder Verfahrensschritte der Bildverarbeitung umfasst.

5. Verfahren nach einem der Ansprüche 1 bis 4,
**dadurch gekennzeichnet, dass**
mindestens ein Messwert aus der Menge der durch das mindestens eine Aufzeichnungsgerät erfassten Messwert als Startwert und jeweils ein Punkt des Modells des zweiten Objektes als zugehöriger Zielwert markiert werden, und die Änderung der Lage des mindestens einen Aufzeichnungsgeräts und/oder die Änderung der Anordnung des Modells des mindestens einen Aufzeichnungsgeräts und/oder des Modells des zweiten Objektes im virtuellen Raum automatisch in Abhängigkeit der markierten Start - und Zielwerte erfolgt.

6. Verfahren nach einem der Ansprüche 1 bis 4,
**dadurch gekennzeichnet, dass**
mindestens ein Punkt des Modells des zweiten Objektes als Startwert und jeweils ein Messwert aus der Menge der durch das mindestens eine Aufzeichnungsgerät erfassten Messwerte als zugehöriger Zielwert markiert werden, und die Änderung der Lage des mindestens einen Aufzeichnungsgeräts und/oder die Änderung der Anordnung des Modells des mindestens einen Aufzeichnungsgeräts und/oder des Modells des zweiten Objektes im virtuellen Raum automatisch in Abhängigkeit der markierten Start- und Zielwerte erfolgt.

7. Verfahren nach einem der voranstehenden Ansprüche,
**dadurch gekennzeichnet, dass**
die durch das mindestens eine Aufzeichnungsgerät erfassten und/oder die durch die Simulation gewonnenen Werte visualisiert werden.

8. Verfahren nach Anspruch 7,
**dadurch gekennzeichnet, dass**
die Visualisierung der Messwerte auf der Benutzeroberfläche einer Datenverarbeitungseinrichtung erfolgt und die Markierung des mindestens einen Start- und Zielwerts durch Dateneingabe. über die Benutzeroberfläche der Datenverarbeitungseinrichtung erfolgt.

9. Anordnung zur Bestimmung der relativen Lage eines ersten Objektes bzgl. eines zweiten Objektes, wobei die Anordnung mindestens ein Aufzeichnungsgerät für elektromagnetische und/oder akustische Wellen in definierter Lagebeziehung zu dem ersten Objekt und eine Datenverarbeitungseinrichtung umfasst und das mindestens eine Aufzeichnungsgerät derart angeordnet ist, dass von dem zweiten Objekt ausgehende elektromagnetische und/oder akustische Wellen wenigstens teilweise durch das mindestens eine Aufzeichnungsgerät erfasst werden und die Anordnung derart eingerichtet ist, dass ein Verfahren zur Bestimmung der relativen Lage eines ersten Objektes bzgl. eines zweiten Objektes ausführbar ist, indem
mittels eines oder mehrerer auf der Datenverarbeitungseinrichtung installierter Computerprogramme die Aufzeichnung der elektromagnetischen und/oder akustischen Wellen simuliert wird, indem in einem virtuellen Raum ein Modell des mindestens einen Aufzeichnungsgeräts und ein Modell des zweiten Objektes angeordnet werden, und
die relative Lage des ersten Objektes bzgl. des zweiten Objektes bestimmt wird, indem
- die durch das mindestens eine Aufzeichnungsgerät erfassten Messwerte dem Computerprogramm zur Verfügung gestellt und mit den durch die Simulation erzeugten Werten verglichen und hinsichtlich ihrer Ähnlichkeit bewertet werden,
- die relative Lage des ersten Objektes bzgl. des zweiten Objektes aus der relativen Lage des Modells des mindestens einen Aufzeichnungsgeräts bzgl. des Modells des zweiten Objektes in dem virtuellen Raum abgeleitet wird, falls das Ergebnis der Bewertung ein vorgebbares Kriterium erfüllt, oder
- durch Änderung der Lage des mindestens einen Aufzeichnungsgeräts und/oder Änderung der Anordnung des Modells des mindestens einen Aufzeichnungsgeräts und/oder des Modells des zweiten Objektes in dem virtuellen Raum die durch das mindestens eine Aufzeichnungsgerät erfassten und/oder die durch die Simulation erzeugten Werte verändert, erneut verglichen und bewertet werden.

10. Anordnung nach Anspruch 9,
**dadurch gekennzeichnet, dass**
das mindestens eine Aufzeichnungsgerät zumindest zeitweise fest in das erste Objekt integriert ist.

11. Anordnung nach Anspruch 9 oder 10,
**dadurch gekennzeichnet, dass**
das erste Objekt eine Messanordnung mit mindestens einem Sensor ist.

12. Anordnung nach einem der Ansprüche 9 bis 11,
**dadurch gekennzeichnet, dass**
die Messanordnung als Array von Sensoren ausgebildet ist.

13. Anordnung nach einem der Ansprüche 9 bis 12,
**dadurch gekennzeichnet, dass**
die Messanordnung ein Mikrofon-Array ist, wobei in die Messanordnung eine optische Kamera integrierbar ist.

14. Computerprogramm, das es einem Computer ermöglicht, nachdem es in den Speicher des Computers geladen worden ist, ein Verfahren zur Bestimmung der relativen Lage eines ersten Objektes bzgl. eines zweiten Objektes auszuführen, wobei das erste Objekt eine definierte Lagebeziehung zu mindestens einem Aufzeichnungsgerät für elektromagnetische und/oder akustische Wellen aufweist und das mindestens eine Aufzeichnungsgerät derart angeordnet wird, dass von dem zweiten Objekt ausgehende elektromagnetische und/oder akustische Wellen wenigstens teilweise durch das mindestens eine Aufzeichnungsgerät erfasst werden,
in einer Datenverarbeitungseinrichtung mittels eines oder mehrerer auf der Datenverarbeitungseinrichtung installierter Computerprogramme die Aufzeichnung der elektromagnetischen und/oder akustischen Wellen simuliert wird, indem in einem virtuellen Raum ein Modell des mindestens einen Aufzeichnungsgeräts und ein Modell des zweiten Objektes angeordnet wird, und
die relative Lage des ersten Objektes bzgl. des zweiten Objektes bestimmt wird, indem
- die durch das mindestens eine Aufzeichnungsgerät erfassten Messwerte dem Computerprogramm zur Verfügung gestellt und mit den durch die Simulation erzeugten Werten verglichen und hinsichtlich ihrer Ähnlichkeit bewertet werden,
- die relative Lage des ersten Objektes bzgl. des zweiten Objektes aus der relativen Lage des Modells des mindestens einen Aufzeichnungsgeräts bzgl. des Modells des zweiten Objektes in dem virtuellen Raum abgeleitet wird, falls das Ergebnis der Bewertung ein vorgebbares Kriterium erfüllt, oder
- durch Änderung der Lage des mindestens einen Aufzeichnungsgeräts und/oder Änderung der Anordnung des Modells des mindestens einen Aufzeichnungsgeräts und/oder des Modells des zweiten Objektes in dem virtuellen Raum die durch das mindestens eine Aufzeichnungsgerät erfassten und/oder die durch die Simulation erzeugten Werte verändert, erneut verglichen und bewertet werden.

15. Computerlesbares Speichermedium, auf dem ein Programm gespeichert ist, das es einem Computer ermöglicht, nachdem es in den Speicher des Computers geladen worden ist, ein Verfahren zur Bestimmung der relativen Lage eines ersten Objektes bzgl. eines zweiten Objektes auszuführen, wobei das erste Objekt eine definierte Lagebeziehung zu mindestens einem Aufzeichnungsgerät für elektromagnetische und/oder akustische Wellen aufweist und das mindestens eine Aufzeichnungsgerät derart angeordnet wird, dass von dem zweiten Objekt ausgehende elektromagnetische und/oder akustische Wellen wenigstens teilweise durch das mindestens eine Aufzeichnungsgerät erfasst werden,
in einer Datenverarbeitungseinrichtung mittels eines oder mehrerer auf der Datenverarbeitungseinrichtung installierter Computerprogramme die Aufzeichnung der elektromagnetischen und/oder akustischen Wellen simuliert wird, indem in einem virtuellen Raum ein Modell des mindestens einen Aufzeichnungsgeräts und ein Modell des zweiten Objektes angeordnet werden, und
die relative Lage des ersten Objektes bzgl. des zweiten Objektes bestimmt wird, indem.
- die durch das mindestens eine Aufzeichnungsgerät erfassten Messwerte dem Computerprogramm zur Verfügung gestellt und mit den durch die Simulation erzeugten Werten verglichen und hinsichtlich ihrer Ähnlichkeit bewertet werden,
- die relative Lage des ersten Objektes bzgl. des zweiten Objektes aus der relativen Lage des Modells des mindestens einen Aufzeichnungsgeräts bzgl. des Modells des zweiten Objektes in dem virtuellen Raum abgeleitet wird, falls das Ergebnis der Bewertung ein vorgebbares Kriterium erfüllt, oder
- durch Änderung der Lage des mindestens einen Aufzeichnungsgeräts und/oder Änderung der Anordnung des Modells des mindestens einen Aufzeichnungsgeräts und/oder des Modells des zweiten Objektes in dem virtuellen Raum die durch das mindestens eine Aufzeichnungsgerät erfassten und/oder die durch die Simulation erzeugten Werte verändert, erneut verglichen und bewertet werden.

## Claims

1. Method for determining the relative position of a first object in relation to a second object, wherein the first object has a defined positional relationship to at least one recording device for electromagnetic and/or acoustic waves and the at least one recording device is arranged so that waves originating from the second object are recorded at least partially by the at least one recording device, **characterized in that**
the recording of the electromagnetic and/or acoustic waves is simulated in a data processing device having one or more computer programs installed on the data processing device by arranging a model of the at least one recording device and a model of the second object in a virtual space, and
that the relative position of the first object is determined in relation to the second object by
- providing the measurement values recorded by the at least one recording device to the computer program and comparing the measurement values with the values generated by the simulation and evaluating the measurement values with respect to their similarity,
- deriving the relative position of the first object in relation to the second object from the relative position of the model of the at least one recording device in relation to the model of the second object in virtual space, if the result of the evaluation satisfies a predeterminable criterion, or
- changing, comparing again and reevaluating the values recorded by the at least one recording device and/or the values generated by the simulation by changing the position of the at least one recording device and/or by changing the configuration of the model of the at least one recording device and/or of the model of the second object in virtual space.

2. Method according to claim 1,
**characterized in that**
an optical camera (7) and/or an acoustic camera (3) is used as the recording device.

3. Method according to claim 1 or 2,
**characterized in that**
the first and second object as well as the model of the at least one recording device and the model of the second object are associated with a corresponding coordinate system, and the relative position of the first object in relation to the second object is derived from the relative position of the model of the at least one recording device in relation to the model of the second object in virtual space by a coordinate transformation.

4. Method according to one of the preceding claims,
**characterized in that**
comparing the measurement values includes process steps used in photogrammetry, computer graphics and/or process steps used in image processing.

5. Method according to one of the claims 1 to 4,
**characterized in that**
at least one measurement value from the set of the measurement values recorded by the at least one recording device is designated as a start value and a respective point of the model of the second object is designated as an associated target value, and that the position of the at least one recording device and/or the configuration of the model of the at least one recording device and/or of the model of the second object are changed automatically in virtual space depending on the designated start and target values.

6. Method according to one of the claims 1 to 4,
**characterized in that**
at least one point of the model of the second object is designated as a start value and a respective measurement value from the set of the measurement values recorded by the at least one recording device is designated as an associated target value, and that the position of the at least one recording device and/or the configuration of the model of the at least one recording device and/or of the model of the second object are changed automatically in virtual space depending on the designated start and target values.

7. Method according to one of the preceding claims,
**characterized in that**
the values recorded by the at least one recording device and/or the values obtained with the simulation are visualized.

8. Method according to claim 7,
**characterized in that**
the measurement values are visualized on the user interface of a data processing device and that the at least one start and target value are designated by data input via the user interface of the data processing device.

9. System for determining the relative position of a first object in relation to a second object, wherein the system includes at least one recording device for electromagnetic and/or acoustic waves in a defined positional relationship to the first object as well as a data processing device, and wherein the at least one recording device is arranged so that electromagnetic and/or acoustic waves originating from the second object are recorded at least partially by the at least one recording device, and wherein the system is configured so that a method for determining the relative position of a first object in relation to a second object can be performed by
simulating recording the electromagnetic and/or acoustic waves with one or more computer programs installed on the data processing device by arranging a model of the at least one recording device and a model of the second object in a virtual space, and
determining the relative position of the first object in relation to the second object by
- providing the measurement values recorded by the at least one recording device to the computer program and comparing the measurement values with the values generated by the simulation and evaluating the measurement values with respect to their similarity,
- deriving the relative position of the first object in relation to the second object from the relative position of the model of the at least one recording device in relation to the model of the second object in virtual space, if the result of the evaluation satisfies a predeterminable criterion, or
- changing, comparing again and reevaluating the values recorded by the at least one recording device and/or the values generated by the simulation by changing the position of the at least one recording device and/or by changing the configuration of the model of the at least one recording device and/or of the model of the second object in virtual space.

10. System according to claim 9,
**characterized in that**
the at least one recording device is at least temporarily fixedly integrated in the first object.

11. System according to claim 9 or 10,
**characterized in that**
the first object is a measurement apparatus with at least one sensor.

12. System according to one of the claims 9 to 11,
**characterized in that**
the measurement apparatus is implemented as a sensor array.

13. System according to one of the claims 9 to 12,
**characterized in that**
the measurement apparatus is a microphone array, with an optical camera being integratable in the measurement apparatus.

14. Computer program which enables a computer, after the program is loaded into a memory of the computer, to execute a method for determining the relative position of a first object in relation to a second object, wherein the first object has a defined positional relationship to at least one recording device for electromagnetic and/or acoustic waves and wherein the at least one recording device is configured so that electromagnetic and/or acoustic waves originating from the second object are recorded at least partially by the at least one recording device,
wherein recording of the electromagnetic and/or acoustic waves is simulated in a data processing device having one or more computer programs installed on the data processing device by arranging a model of the at least one recording device and a model of the second object in virtual space, and
wherein the relative position of the first object in relation to the second object is determined by
- providing the measurement values recorded by the at least one recording device to the computer program and comparing the measurement values with the values generated by the simulation and evaluating the measurement values with respect to their similarity,
- deriving the relative position of the first object in relation to the second object from the relative position of the model of the at least one recording device in relation to the model of the second object in virtual space, if the result of the evaluation satisfies a predeterminable criterion, or
- changing, comparing again and reevaluating the values recorded by the at least one recording device and/or the values generated by the simulation by changing the position of the at least one recording device and/or by changing the configuration of the model of the at least one recording device and/or of the model of the second object in virtual space.

15. Computer-readable storage medium having stored thereon a program which enables a computer, after the program is loaded into a memory of the computer, to execute a method for determining the relative position of a first object in relation to a second object, wherein the first object has a defined positional relationship to at least one recording device for electromagnetic and/or acoustic waves and wherein the at least one recording device is configured so that electromagnetic and/or acoustic waves originating from the second object are recorded at least partially by the at least one recording device,
wherein recording the electromagnetic and/or acoustic waves is simulated in a data processing device having one or more computer programs installed on the data processing device by arranging a model of the at least one recording device and a model of the second object in virtual space, and
wherein the relative position of the first object in relation to the second object is determined by
- providing the measurement values recorded by the at least one recording device to the computer program and comparing the measurement values with the values generated by the simulation and evaluating the measurement values with respect to their similarity,
- deriving the relative position of the first object in relation to the second object from the relative position of the model of the at least one recording device in relation to the model of the second object in virtual space, if the result of the evaluation satisfies a predeterminable criterion, or
- changing, comparing again and reevaluating the values recorded by the at least one recording device and/or the values generated by the simulation by changing the position of the at least one recording device and/or by changing the configuration of the model of the at least one recording device and/or of the model of the second object in virtual space.

## Revendications

1. Procédé pour déterminer la position relative d'un premier objet par rapport à un deuxième objet, le premier objet présentant une relation de position définie avec au moins un appareil d'enregistrement d'ondes électromagnétiques et/ou acoustiques, et l'appareil d'enregistrement au moins au nombre de un étant disposé de telle sorte que des ondes partant du deuxième objet sont détectées au moins partiellement par l'appareil d'enregistrement au moins au nombre de un,
**caractérisé en ce que**,
dans un dispositif de traitement de données, l'enregistrement des ondes électromagnétiques et/ou acoustiques est simulé au moyen d'un ou de plusieurs programmes d'ordinateur installés dans le dispositif de traitement de données par le fait qu'un modèle de l'appareil d'enregistrement au moins au nombre de un et un modèle du deuxième objet sont disposés dans un espace virtuel, et
la position relative du premier objet par rapport au deuxième objet est définie par le fait que
- les valeurs de mesure saisies par l'appareil d'enregistrement au moins au nombre de un sont mises à la disposition du programme d'ordinateur et comparées aux valeurs produites par la simulation et évaluées du point de vue de leur ressemblance,
- la position relative du premier objet par rapport au deuxième objet est dérivée à partir de la position relative du modèle de l'appareil d'enregistrement au moins au nombre de un par rapport au modèle du deuxième objet dans l'espace virtuel si le résultat de l'évaluation remplit un critère paramétrable ou,
- par modification de la position de l'appareil d'enregistrement au moins au nombre de un et/ou par modification de la disposition du modèle de l'appareil d'enregistrement au moins au nombre de un et/ou du modèle du deuxième objet dans l'espace virtuel, les valeurs saisies par l'appareil d'enregistrement au moins au nombre de un et/ou les valeurs produites par la simulation sont modifiées, de nouveau comparées et évaluées.

2. Procédé selon la revendication 1,
**caractérisé en ce que**,
comme appareil d'enregistrement, on utilise une caméra optique (7) et/ou une caméra acoustique (3).

3. Procédé selon la revendication 1 ou 2,
**caractérisé en ce que**
le premier et le deuxième objet ainsi que le modèle de l'appareil d'enregistrement au moins au nombre de un et le modèle du deuxième objet sont reliées respectivement à un système de coordonnées correspondant, et **en ce que** la position relative du premier objet par rapport au deuxième objet est dérivée par transformation de coordonnées à partir de la position relative du modèle de l'appareil d'enregistrement au moins au nombre de un par rapport au modèle du deuxième objet dans l'espace virtuel.

4. Procédé selon une des revendications précédentes,
**caractérisé en ce que**
la comparaison des valeurs de mesure comprend des étapes de procédé de la photogrammétrie, de l'infographie et/ou des étapes de procédé du traitement d'images.

5. Procédé selon une des revendications 1 à 4,
**caractérisé en ce**
**qu'**au moins une valeur de mesure provenant de la quantité de valeurs de mesure saisies par l'appareil d'enregistrement au moins au nombre de un est marquée comme valeur de départ, et en ce que respectivement un point du modèle du deuxième objet est marqué comme valeur cible correspondante, et en ce que la modification de la position de l'appareil d'enregistrement au moins au nombre de un et/ou la modification de la disposition du modèle de l'appareil d'enregistrement au moins au nombre de un et/ou du modèle du deuxième objet dans l'espace virtuel est effectuée automatiquement en fonction des valeurs de départ et cible marquées.

6. Procédé selon une des revendications 1 à 4,
**caractérisé en ce**
**qu'**au moins un point du modèle du deuxième objet est marqué comme valeur de départ, et en ce que respectivement une valeur de mesure provenant de la quantité de valeurs de mesure saisies par l'appareil d'enregistrement au moins au nombre de un est marquée comme valeur cible correspondante, et en ce que la modification de la position de l'appareil d'enregistrement au moins au nombre de un et/ou la modification de la disposition du modèle de l'appareil d'enregistrement au moins au nombre de un et/ou du modèle du deuxième objet dans l'espace virtuel est effectuée automatiquement en fonction des valeurs de départ et cible marquées.

7. Procédé selon une des revendications précédentes,
**caractérisé en ce que**
les valeurs saisies par l'appareil d'enregistrement au moins au nombre de un et/ou acquises par la simulation sont visualisées.

8. Procédé selon la revendication 7,
**caractérisé en ce que**
la visualisation des valeurs de mesure s'effectue sur l'interface opérateur d'un dispositif de traitement de données, et **en ce que** le marquage de la valeur de départ et de la valeur cible au moins au nombre de un s'effectue par l'entrée de données par le biais de l'interface opérateur du dispositif de traitement de données.

9. Dispositif pour déterminer la position relative d'un premier objet par rapport à un deuxième objet, le dispositif comprenant au moins un appareil d'enregistrement d'ondes électromagnétiques et/ou acoustiques dans une relation de position définie avec le premier objet et un dispositif de traitement de données, et en ce que l'appareil d'enregistrement au moins au nombre de un est disposé de telle sorte que des ondes électromagnétiques et/ou acoustiques sortant du deuxième objet sont détectées au moins partiellement par l'appareil d'enregistrement au moins au nombre de un, et en ce que le dispositif est aménagé de telle sorte qu'un procédé pour déterminer la position relative d'un premier objet par rapport à un deuxième objet peut être exécuté par le fait que,
au moyen d'un ou de plusieurs programmes d'ordinateur installés dans le dispositif de traitement de données, l'enregistrement des ondes électromagnétiques et/ou acoustiques est simulé par le fait qu'un modèle de l'appareil d'enregistrement au moins au nombre de un et un modèle du deuxième objet sont disposés dans un espace virtuel, et
la position relative du premier objet par rapport au deuxième objet est déterminée par le fait que
- les valeurs de mesure saisies par l'appareil d'enregistrement au moins au nombre de un sont mises à la disposition du programme d'ordinateur et comparées aux valeurs produites par la simulation et évaluées du point de vue de leur ressemblance,
- la position relative du premier objet par rapport au deuxième objet est dérivée à partir de la position relative du modèle de l'appareil d'enregistrement au moins au nombre de un par rapport au modèle du deuxième objet dans l'espace virtuel si le résultat de l'évaluation remplit un critère paramétrable ou,
- par modification de la position de l'appareil d'enregistrement au moins au nombre de un et/ou par modification de la disposition du modèle de l'appareil d'enregistrement au moins au nombre de un et/ou du modèle du deuxième objet dans l'espace virtuel, les valeurs saisies par l'appareil d'enregistrement au moins au nombre de un et/ou les valeurs produites par la simulation sont modifiées, de nouveau comparées et évaluées.

10. Dispositif selon la revendication 9,
**caractérisé en ce**
**qu'**au moins un appareil d'enregistrement est intégré, au moins temporairement, de façon fixe dans le premier objet.

11. Dispositif selon la revendication 9 ou 10,
**caractérisé en ce que**
le premier objet est un dispositif de mesure avec au moins un capteur.

12. Dispositif selon une des revendications 9 à 11,
**caractérisé en ce que**
le dispositif de mesure est constitué sous forme de groupe de capteurs.

13. Dispositif selon une des revendications 9 à 12,
**caractérisé en ce que**
le dispositif de mesure est un groupe de microphones, une caméra optique pouvant être intégrée dans le dispositif de mesure.

14. Programme d'ordinateur qui permet à un ordinateur, après qu'il a été chargé dans la mémoire de l'ordinateur, d'exécuter un procédé pour déterminer la position relative d'un premier objet par rapport à un deuxième objet, le premier objet présentant une relation de position définie avec au moins un appareil d'enregistrement d'ondes électromagnétiques et/ou acoustiques, et en ce que l'appareil d'enregistrement au moins au nombre de un est disposé de telle sorte que des ondes électromagnétiques et/ou acoustiques sortant du deuxième objet sont détectées au moins partiellement par l'appareil d'enregistrement au moins au nombre de un,
dans un dispositif de traitement de données, l'enregistrement des ondes électromagnétiques et/ou acoustiques est simulé au moyen d'un ou de plusieurs programmes d'ordinateur installés dans le dispositif de traitement de données par le fait qu'un modèle de l'appareil d'enregistrement au moins au nombre de un et un modèle du deuxième objet sont disposés dans un espace virtuel, et
la position relative du premier objet par rapport au deuxième objet est définie par le fait que
- les valeurs de mesure saisies par l'appareil d'enregistrement au moins au nombre de un sont mises à la disposition du programme d'ordinateur et comparées aux valeurs produites par la simulation et évaluées du point de vue de leur ressemblance,
- la position relative du premier objet par rapport au deuxième objet est dérivée à partir de la position relative du modèle de l'appareil d'enregistrement au moins au nombre de un par rapport au modèle du deuxième objet dans l'espace virtuel si le résultat de l'évaluation remplit un critère paramétrable ou,
- par modification de la position de l'appareil d'enregistrement au moins au nombre de un et/ou par modification de la disposition du modèle de l'appareil d'enregistrement au moins au nombre de un et/ou du modèle du deuxième objet dans l'espace virtuel, les valeurs saisies par l'appareil d'enregistrement au moins au nombre de un et/ou les valeurs produites par la simulation sont modifiées, de nouveau comparées et évaluées.

15. Support de mémoire lisible par ordinateur, sur lequel est enregistré un programme qui permet à un ordinateur, après qu'il a été chargé dans la mémoire de l'ordinateur, d'exécuter un procédé pour déterminer la position relative d'un premier objet par rapport à un deuxième objet, le premier objet présentant une relation de position définie avec au moins un appareil d'enregistrement d'ondes électromagnétiques et/ou acoustiques, et en ce que l'appareil d'enregistrement au moins au nombre de un est disposé de telle sorte que des ondes électromagnétiques et/ou acoustiques sortant du deuxième objet sont détectées au moins partiellement par l'appareil d'enregistrement au moins au nombre de un,
dans un dispositif de traitement de données, l'enregistrement des ondes électromagnétiques et/ou acoustiques est simulé au moyen d'un ou de plusieurs programmes d'ordinateur installés dans le dispositif de traitement de données par le fait qu'un modèle de l'appareil d'enregistrement au moins au nombre de un et un modèle du deuxième objet sont disposés dans un espace virtuel, et
la position relative du premier objet par rapport au deuxième objet est définie par le fait que
- les valeurs de mesure saisies par l'appareil d'enregistrement au moins au nombre de un sont mises à la disposition du programme d'ordinateur et comparées aux valeurs produites par la simulation et évaluées du point de vue de leur ressemblance,
- la position relative du premier objet par rapport au deuxième objet est dérivée à partir de la position relative du modèle de l'appareil d'enregistrement au moins au nombre de un par rapport au modèle du deuxième objet dans l'espace virtuel si le résultat de l'évaluation remplit un critère paramétrable ou,
- par modification de la position de l'appareil d'enregistrement au moins au nombre de un et/ou par modification de la disposition du modèle de l'appareil d'enregistrement au moins au nombre de un et/ou du modèle du deuxième objet dans l'espace virtuel, les valeurs saisies par l'appareil d'enregistrement au moins au nombre de un et/ou les valeurs produites par la simulation sont modifiées, de nouveau comparées et évaluées.
